# EUROPEAN PATENT APPLICATION

(11) **EP 4 353 400 A1**
(43) Date of publication of application: **17.04.2024**
(21) Application number: 22807930.7
(22) Date of filing: 25.01.2022
(51) Int. Cl.: B23K 31/02, B23K 37/02, B23K 11/10, B23K 11/30

(54) **APPARATUS FOR MICRO-WELDING WIRE CONDUCTORS**

(30) Priority: 13.05.2021 RU 2021113653
(71) Applicant: Poduvaltsev, Aleksei Aleksandrovich, Nizhny Novgorod 603146 (RU)
(72) Inventor: Poduvaltsev, Aleksei Aleksandrovich, Nizhny Novgorod 603146 (RU)
(74) Representative: Osmans, Voldemars
(86) International application number: PCT/RU2022/050023
(87) International publication number: WO 2022/240312

(57) **Abstract**

An apparatus for micro-welding wire conductors comprises a housing having an inverted U-shaped load-bearing base and being mounted on a support plate, a welding head including a holder for a welding tool for micro-welding, a primary double-armed lever and a secondary double-armed lever, which are spring-loaded against one another and are mounted in spaced apart X-axis centres of oscillation, a mechanism for vertical and horizontal movement, and a wire clamping assembly with jaws which is mounted on the secondary double-armed lever in order to feed a wire into the welding zone along a Y axis. The primary and secondary double-armed levers are mounted on a common axis of oscillation. The secondary double-armed lever is spring-loaded against a fixed bracket via an adjustable stop, said bracket being mounted on the load-bearing base. The arms of the secondary double-armed lever are mutually perpendicular. Mounted on the vertical arm of the secondary double-armed lever is an adapter for transmitting the rotation of the double-armed lever about the axis of oscillation. One part of the adapter is configured in the form of a conical aperture and a groove abutting same for interaction with a conical end of a flexible transmission of a foot-operated drive, and the other part of the adapter is configured in the form of a plane that is inclined toward the vertical arm of the secondary double-armed lever

## Description

### TECHNICAL FIELD

The invention pertains to the equipment for wire assembly of semiconductor devices and hybrid integrated circuits, in particular, apparatuses for resistance micro-welding.

### BACKGROUND ART

Due to growing integration of modern semiconductor devices, for example, micro-assemblies which consist of hybrid integrated circuits (HIC) which are usually placed in a hermetic housing which provides an effective protection of its contents from moisture, dirt, dust, mechanical and other negative impacts, the outside dimensions of device housings are increasing rapidly achieving, for example, 400×1000 mm. This makes difficult the wire installation of such devices using the resistance micro-welding.

Besides the housing design, for example, that of microwave devices comprises a deep "well" with the housing walls of 25 mm high. This also complicates wire bonding of such devices, i.e. welding near the "well" wall when production tooling, for example, the jaws which feed the wire to the welding zone may touch the housing wall.

At the same time the objective consists in readjusting quickly the production tooling of apparatuses for the purpose of flexible use of necessary actuating mechanisms for special-purpose wire bonding of a device, for example: assembly of a device using jumper wires connected in series by means of resistance micro-welding from both ends by feeding the conductor to the welding zone through a side feed liner of the welding tool or assembly of a device when the design of the assembled element consists of a compound-filled semiconductor crystal with single conductors outgoing in all directions - packageless microcircuits with flexible wire ends - which should be placed by tweezers manually one-by-one under the welding tool and spot welded.

There exists an apparatus for connecting terminals of semiconductor devices (Certificate SU546961A1, IPC H01L21/66, published 15.02.1977) with a welding head with a tool and a bonder capillary, wire feeding and cutting off device with clamp bars and a manipulator with a suspended and stationary plates. Besides the bonder capillary is fixed on one of clamp bars and is connected to the drive which consists of two electromagnets mounted on the holder which is pivotally connected via a rod located on the manipulator's moving plate, with the feeding and cutting off mechanism installed on one of the plates. Apart from that, the electromagnets are installed in such a way that they may contact alternately the moving plate and the plate spring-loaded against the manipulator stationary plate.

A disadvantage of this apparatus is that the welding head is installed on the manipulator plate with the opportunity to move along the X, Y axes while it will be difficult to position the welding electrode relative to the device's interconnect pad as well to move the welding electrode along the X, Y axes when making a jumper between two interconnect pads relative to the optical surveillance system (microscope) because the object under observation will get out of focus of the optical system. So, when mounting especially long jumper wires it will be necessary to rearrange it.

There exists a micro-welding unit (Utility Model Patent RU15970U1, IPC B23K 31/02, published on 27.11.2000) which comprises a housing installed on a support plate, a welding head which includes a tool, a holder and a double-armed lever mounted in the centers, a vertical movement mechanism, a wire clamping assembly with jaws, an optical head, a manipulator for moving the weld device, an assembly table, a control unit. The housing is equipped with an inverted U-shaped load-bearing base on which the following is installed: the welding head, its horizontal way unit which movement coincides with the direction of jumper wire formation, a manipulator, and an assembly table. The control unit is installed in the niche of the inverted U-shaped base. The double-armed lever and the tool holder are installed in three centers, the middle center is the common one. They are mounted on a bracket coaxially with each other and are in the same horizontal plane with the working end of the welding tool. The manipulator is made as two hollow shafts that move, related to each other, along the guides in the vertical plane. The lower shaft is pivotally connected at one end to the lower handle of the manipulator and the pivot can rotate around the vertical axis of the shaft due to a flywheel. The upper shaft is also connected via a pivot to the assembly table which together with the pivot can rotate around the vertical axis of the shaft. Also, the upper shaft is connected to the inverted U-shaped load-bearing base via an additional pivot.

A disadvantage of this apparatus is that when an operator moves the manipulator handle along the X, Y axes to position the welding electrode and the interconnect pad the object table with the device moves in the direction opposite (mirror-like) to the movement of the manipulator handle which is inconvenient for positioning of the welded parts relative to each other. Besides, absence of a manual drive of moving the welding head along the Z axis complicates mounting of bare semiconductors by means of spot welding of a terminal on the device interconnect pads which requires that the wire conductor was placed manually under the welding tool using technological tweezers.

The installation of ultrasonic micro-welding (patent RU2742635, IPC B23K 20/10, B23K 37/02, published on 09.02.2021) was chosen as a prototype. It consists of a body with an inverse U-shaped bearing base mounted on a base plate. It includes a welding head comprising a holder of an ultrasonic transducer with a welding tool for ultrasonic welding fixed in it and a double-armed lever mounted in the centers coaxial to each other. The installation also contains a mechanism for vertical and horizontal movement, a wire clamping unit with jaws, an optical head, an assembly heated table for the device to be welded, a manipulator for moving the assembly table, an ultrasonic generator and a current source. Besides, it is equipped with a secondary double-armed lever and a holder with a contact electrode fixed in it. The contact electrode fixed in the holder is installed next to the welding tool. The working end of the contact electrode is spaced from the working end of the welding tool along the Z axis by the distance not less than the value of the conductor upsetting as a result of welding. Besides, the contact electrode is installed in such a way that it can move relative to the welding tool along the X, Y, Z axes and can set an adjustable static pressure on the conductor during welding. The contact electrode holder is fixed on a secondary double-armed lever and is electrically isolated from the installation body. The ultrasonic transducer holder and the contact electrode holder are electrically connected to the outputs of the current source and the area of the contact surface of the working end of the contact electrode exceeds the area of he contact surface of the working end of the welding tool.

Prototype disadvantages:
- When performing repair and routine maintenance the disassembly and assembly of the welding head installed in the separated centers require an additional adjustment of the mechanisms relative to each other. Calibrated pressure to secure the centers to the bearing cages is also necessary: in case of insufficient pressure there will be play, in case of overpressure the bearings will produce crunching noises during operation, and this is unacceptable for welding.
- It is impossible to place the conductor manually under the working end of the contact electrode for spot welding in hard-to-reach places of the micro-assembly because there is no foot-operated drive.
- Mounting of large-sized devices is complicated because it is impossible to increase sticking out of the welding head from the attachment point to the end of the welding tool.
- It is difficult to install conductors near the wall of the device housing because the jaws feed the conductor into the welding zone along the Y axis and may touch the wall of the device housing, and this is unacceptable.
- It is difficult to mount packageless microcircuits with flexible wire leads which design consists of a crystal with single conductors outgoing from it in all directions. They are placed with tweezers on interconnect pads under the welding tool one-by-one manually. Then spot welding is performed.

### SUMMARY OF INVENTION

The main objective of the offered invention as compared to the existing micro-welding unit is solving of the following technological problems which arise in assembly of semiconductor devices:
1. When mounting hybrid micro-assemblies the conductors may be installed using complete jumpers between the first and second welding with the necessary profile of the loop as well as using separate sections of the conductor by means of spot welding for the installation of packageless microcircuits with flexible wire leads. In order to combine such possibilities in the apparatus operation it is necessary to use alternately a hand-operated drive to move the welding tool along the Z axis - in the first case, and a foot drive - in the second case. In this case the drives which move the welding head would operate independently of each other.
2. Due to an increase in outside dimensions of the housings of hybrid micro-assemblies, for example 400×1000 mm, installation of conductors over the area of the device is complicated. This problem is apparent in installation of conductors in the central part of the device. The access of the welding electrode is hindered to this part due to a large size of the housing. Mounting near the housing wall is also troublesome.

As a consequence of the invention implementation additional technical results related to operational convenience of the apparatus may manifest themselves. They will be discussed below.

The abovementioned objective is achieved by the apparatus of micro-welding wire conductors which consists of a housing with an inverted U-shaped load-bearing base mounted on a support plate, a welding head comprising a welding tools holder for micro-welding, the primary and secondary double-armed levers which are spring-loaded against one another and are mounted in spaced apart X axis centres of oscillation, a mechanism for vertical and horizontal movement, a wire clamping assembly with jaws which is mounted on the secondary double-armed lever in order to feed a conductor into the welding zone along the Y axis, an assembly table for the welded device, an optical head, a manipulator of the welded device movement, a solder welding power source in which the following alterations and amendments have been introduced according to the offer:
- the primary and secondary double-armed levers are installed on the common axis of oscillation and the secondary double-armed lever is spring-loaded against a fixed bracket via an adjustable stop (this simplifies assembly-disassembly of the welding head during maintenance as well as allows, using a stop, to adjust the position of the secondary double-armed lever relative to the fixed bracket with an adapter for operation of the transmission, both from the foot- and hand-operated drive. At the same time the adjustable stop between the levers allows to adjust the horizontal position of the primary double-armed lever so that the plane of the working end of the welding tool coincided with the plane of welding);
- the arms of the secondary double-armed lever are mutually perpendicular. One arm is horizontal and the second one - vertical. There is also an adapter mounted on the vertical arm which is intended for transmitting the rotation of the double-armed lever about the axis of oscillation from a hand- or foot-operated drive (this allows to place the adapter closer to the transmission of the foot- and hand-operated drive in order to optimize the arrangement of the apparatus);
- one part of the adapter is configured in the form of a conical aperture and a groove abutting same for interaction with a conical end of a flexible transmission of a foot-operated drive, and the other part of the adapter is configured in the form of a plane inclined toward the vertical arm of the secondary double-armed lever and interacts with an antifriction bearing of the hand-operated drive (the adapter configuration allows to transmit rotation from the foot- and hand-operated drives independently of each other to the secondary double-armed lever. This expands the technological capabilities of the apparatus due to the alternate use of drives, in one case - when using the hand-operated drive (handle) to move the welding tool along the Z axis and moving the object table with the manipulator along the X, Y axes (a loop of an assigned profile between the first and second welding may be formed of the conductor). And in case of using the foot-operated drive (pedal) it is possible to feed a section of the conductor manually into the welding zone under the working end of the welding tool for spot welding);

- the hand-operated drive is made as a double-armed lever with an axis of oscillation which is perpendicular to the axis of oscillation of the primary and secondary double-armed levers. The antifriction bearing is installed on the shorter arm of the hand-operated drive (the relationship of arms with regard to the axis of oscillation allows to move the welding head precisely into the welding zone in order to touch softly the welding electrode of the interconnect pad before welding and also allows to form the jumper wires of the required height during installation);
- the holder for a welding tool is fastened to a bracket fixed on the arm of the primary double-armed lever (for example, using a clamp) and there is an opportunity of bracket's angular rotation around its axis and movement along the primary double-armed lever along the Y axis (the option of the holder's turn around the axis allows to set the imprint of the working end of the welding tool in such a way that it coincided with the welding plane, while the movement of the tool holder along the Y axis allows to increase the sticking out of the welding head when installing large-sized devices to the required distance, in order to expand the technological capabilities of the apparatus);
- a wire clamping assembly with jaws is mounted on the arm of the primary double-armed lever in order to feed the conductor into the welding zone along the X axis (when installing devices with "wells" in their design, i.e. when the device has walls, such position of the jaws relative to the welding electrode allows to feed the conductor into the welding zone directly against to the device wall. This also expands the technological capabilities of the apparatus);
- on both arms of the primary double-armed lever brackets may be mounted with the loads which may be moved along them along the Y axis (this allows for quick adjustment of the welding pressure on the welding tool when changing the conductor diameter during the device installation process).

### DESCRIPTION OF EMBODIMENT

The invention is illustrated by drawings.

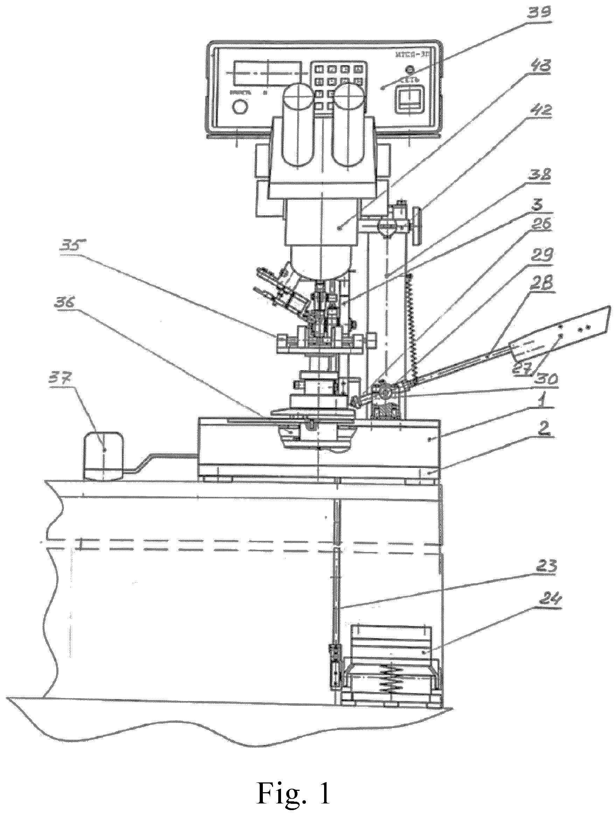

Fig 1 shows an apparatus for micro-welding wire conductors, front view.

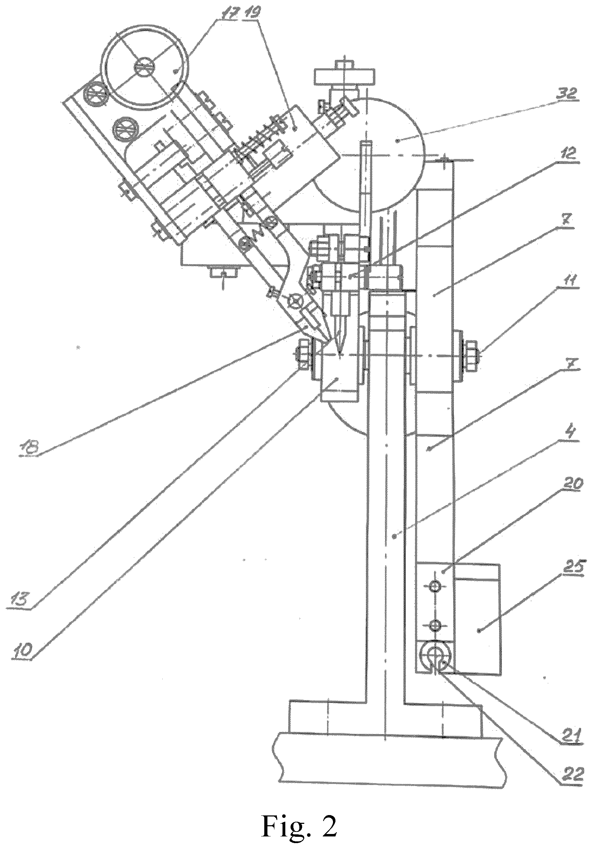

Fig 2 shows the front view of the welding head of the apparatus for micro-welding wire conductors.

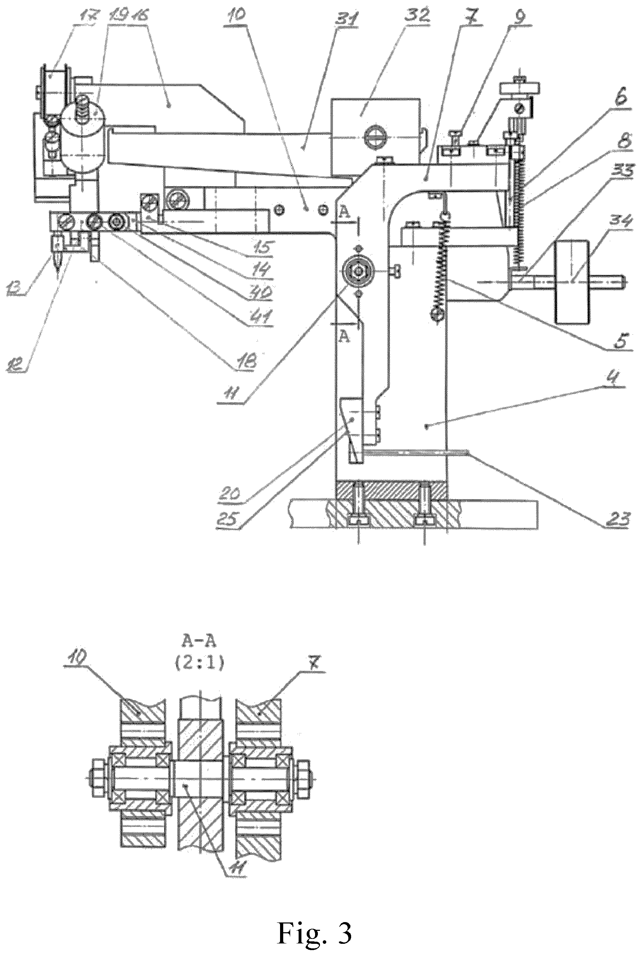

Fig 3 shows the side view of the welding head of the apparatus for micro-welding wire conductors.

The apparatus for resistance micro-welding comprises a housing with a load-bearing base (1) mounted on a support plate (2), a welding head (3) which consists of a fixed bracket (4) which is spring-loaded by a spring (5) against a secondary double-armed lever (7) via an adjustable stop (6), and the a secondary double-armed lever (7) is spring-loaded by a spring (8) against a primary double-armed lever (10) via an adjustable stop (9). Both levers are mounted on the common axis of oscillation (11) which is parallel to the X axis. The following is fixed on the primary lever (10): a holder (12) for a welding tool (13) for single-sided resistance micro-welding and here the holder (12) is fixed on a bracket (14) which is installed along the primary double-armed lever (10) in a clamp (15); besides the holder (12) together with the tool (13) has an option of angular rotation and movement along the Y axis in the clamp (15) relative to the primary double-armed lever (10); apart from that, on the lever (10) a bracket (16) is mounted with a coil (17) fastened to it with a mounting conductor wound on it and jaws (18) to clamp and feed the conductor through a capillary feed liner of the welding tool (13) into the welding zone along the X axis; besides the jaws (18) during the welding are clamped and unclamped by a magnet (19) and the arms of the secondary double-armed lever (7) are perpendicular to each other; there is also an adapter (20) mounted on the vertical arm of the secondary double-armed lever (7); besides one part of the adapter is configured in the form of a conical aperture (21) and a groove (22) abutting same; also in the conical aperture (21) a conical end of a flexible transmission (23) (wire rope cable) from a foot-operated drive - pedal (24), with an incorporated welding start button, is mounted by threading the wire rope cable (23) through the groove (22); and the other part of the adapter is configured in the form of a plane (25) inclined toward the vertical arm of the secondary double-armed lever (7) and here the plane (25) interacts with an antifriction bearing (26) of the hand-operated drive (27) with an incorporated welding start button, besides the hand-operated drive is made as a double-armed lever (28) with the axis of oscillation (29) perpendicular to the axis of oscillation (11) of the primary and secondary double-armed levers; at the same time the antifriction bearing (26) is installed on the shorter arm (30) of the hand-operated drive (27) and the adapter (20) interacts with the secondary double-armed lever (7) and the primary double-armed lever (10) spring-loaded against it, and it rotates them around the axis of oscillation (11), besides the bearing's (26) position relative to the inclined plane (25) of the adapter (20) is set by the stop (6); besides a bracket (31) with the load (32) moved along it is mounted on the arm of the primary double-armed lever (10) located in front of the axis of oscillation (11) while there is also a bracket (33) with the load (34) moved along it mounted on the second arm of the primary double-armed lever (10) located behind the axis of oscillation (11); the object table (35) with the housing of the welded device (not shown in the figure) fixed on it is installed on the manipulator (36) for accurate moving of the object table (35) with the device along the X, Y axes by means of a handle (37); on a stand (38) a solder welding power source (39) is mounted, it is connected by power cables (not shown in the figure) to terminals (40), (41) of the holder (12) of the welding tool (13), an optical head (43) is fixed on the bracket (42).

The apparatus operates as follows.

Before starting the installation procedure the operator sets the sticking out of the welding tool (13) along the Y axis depending on the outside dimensions of the processed device by means of loosening of the fastening of the axis (14) in the clamp (15), where the holder of the welding tool (12) is fixed, and protrudes it to the necessary distance enabling the welding tool (13) to reach the center of the device's processed area. Then the operator sets the parallel position of the working plane of the welding tool end (13) and the welding plane by means of an angular rotation around the bracket's (14) axis, besides the parallel position of the working plane of the welding tool end (13) and the welding plane is set by means of rotating the stop (9) while by rotating the stop (6) the position of the conical aperture (21) and the conical end of a flexible transmission (23) (wire rope cable) from a foot-operated drive - pedal (24) relative each other is set, and also the position of the plane (25) inclined toward the vertical arm of the double-armed lever (7) and the antifriction bearing (26) of the hand-operated drive (27) is set relative to each other in such a way that the distance of movement of the welding tool (13) along the Z axis was maximum and independent of use of the foot- or hand-operated drive; apart from that, the operator by moving loads (32), (34) along corresponding brackets (31), (33) sets the necessary weld pressure for the welding tool (13) and in this case the conductor wound around the coil (17) is threaded through the jaws (18) and further through the capillary feed liner of the welding tool (13) under its working end along the X axis.

The first mode of the apparatus operation

The operator performs installation by jumpers of the assigned shape over the area of the device making the first and second welded connection applying only the hand-operated drive (27): he observes the welding zone through the optical head (43) mounted on the stand (38) and the bracket (42), using the hand-operated drive (27) he moves the welding tool (13) along the Z axis toward the device interconnect pad, in this case the antifriction bearing (26) fixed on the short arm of the hand-operated drive (27) rolls down the inclined plane (22) of the adapter (20) while the secondary lever (7) with the primary lever (10) spring-loaded against it rotates around the axis (11) till the welding tool (13) touches the level of the first interconnect pad; at the same time the stop (9) fixed on the primary double-armed lever moves away from the secondary double-armed lever (7) and a gap is formed between them; and then the working end of the welding tool (13) compresses the conductor by welding force, and the presence of the gap enables the welding tool (13) during welding to perform upsetting of the conductor material to form a welded connection, then the operator actuates the manipulator (36) applying the handle (37) and moves the object table (35) with the device along the X, Y axes and aligns the welding tool (13) with the conductor fed under its working end with the first interconnect pad on the device. Then the operator presses the button on the handle of the manipulator (37) which controls the magnet for clamping jaws (18) (not shown in the figure), in this case the magnet (19) is activated and the jaws (18) unclamp releasing the wire conductor for subsequent threading along the feed liner of the welding tool; then the operator presses the welding start button on the handle of the manual drive (27) and welding current is supplied from the soldering welding power source (39) through power cables and terminals (40), (41) to the holder (12) and further to the welding tool (13) - single-sided resistance micro-welding is performed. After that the operator, using the handle (37) of the manipulator (36) and the handle of the hand-operated drive (27), forms a jumper of the necessary length and height; the second welding in the jumper is performed in a similar way; then the operator, using the handle of the hand-operated drive (27) lifts the welding tool (13) from the place of formation of the second welded connection and with the manipulator (36) control handle (37) moves the object table (35) together with the device along the X axis away from the welding tool (13); in this case the conductor is threaded through the feed liner of the welding tool (13) in such a way that the length of the conductor section under the working end of the welding tool (13) was sufficient to form the next welded connection, and then he uses the button on the manipulator (36) handle (37) to turn off the magnet (19), so the jaws (18) are clamped fixing the conductor; then the operator, moving the manipulator (36) handle (37) further along the X axis, separates the conductor from the second welded connection, while the conductor "tail" remains under the working end of the welding tool (13) to form of the next welded connection, and then the operating cycle of the apparatus repeats.

The second mode of the apparatus operation

The operator installs single conductors which should be connected one-by-one to the interconnect pads of the plate by indirect resistance welding, it should be noted that the operator uses only the foot drive - the pedal (24): the operator, observing the welding zone through the optical head (43) and using the foot drive (24) along the Z axis and the handle (37) for moving the manipulator (36) along the X, Y axes, aligns the working end of the welding tool (13) with the interconnect pad on the device; besides the operator puts a single conductor manually (for example, with tweezers) under the working end of the welding tool (13) and further, manipulating the pedal (24) by means of the transmission (23) and also through the adapter (20), rotates the secondary lever (7) with the primary lever (10) spring-loaded to it around the axis (11) till the welding tool (13) with the conductor touches the interconnect pad; and here the stop (9) fixed on the primary double-armed lever (10) moves away from the secondary double-armed lever (7) and a gap is formed between them; and in this case the working end of the welding tool (13) compresses the conductor with welding force while the presence of a gap enables the welding tool (13) during welding to perform upsetting of the conductor material to form a welded connection; then the operator presses the welding start button incorporated into the pedal (24) and the welding current is supplied from the soldering welding power source through power cables and terminals (40), (41) to the holder (12) of the welding tool (13) - so, single-sided resistance welding is performed; further the operator uses the foot drive (24) to lift the welding electrode (13) from welding, and the assembly cycle is repeated. Then the operator, depending on the assigned assembly technology, assembles the device with completed jumpers or assembles the device by spot welding of single conductors, using the hand- or foot-operated drive.

## Claims

1. An apparatus for micro-welding wire conductors comprising a housing having an inverted U-shaped load-bearing base and mounted on a support plate, a welding head including a holder for a welding tool for micro-welding, a primary double-armed lever and a secondary double-armed lever, which are spring-loaded against one another and are mounted in spaced apart X-axis centres of oscillation, a mechanism for vertical and horizontal movement, and a wire clamping assembly with jaws which is mounted on the secondary double-armed lever in order to feed a wire into the welding zone along the Y axis, an assembly table for welded wire conductors, an optical head, a manipulator of welded wire conductors' movement and welding current source, **characterized in that** the primary and secondary double-armed levers are mounted on a common axis of oscillation, whereas the secondary double-armed lever is spring-loaded against a fixed bracket via an adjustable stop, said bracket being mounted on the load-bearing base, whereas arms of the secondary double-armed lever are mutually perpendicular, one arm is horizontal and the second one - vertical, whereas an adapter is mounted on the vertical arm of the secondary double-armed lever configured for transmitting the rotation of the double-armed lever about the axis of oscillation from a hand- or foot-operated drive, whereas one part of the adapter is made in the form of a conical aperture and a groove abutting same for interaction with a conical end of a flexible transmission of a foot-operated drive, and the other part of the adapter is made in the form of a plane that is inclined toward the vertical arm of the secondary double-armed lever with the opportunity of interaction with an antifriction bearing of the hand-operated drive made as a double-armed lever with the axis of oscillation perpendicular to the axis of oscillation of the primary and secondary double-armed levers, whereas the antifriction bearing is installed on the shorter arm of the hand-operated drive and the holder for a welding tool is fastened to a bracket fixed on the arm of the primary double-armed lever with the opportunity of angular rotation around its axis and movement along the primary double-armed lever along the Y axis, whereas a wire conductor clamping assembly with jaws is mounted on the arm of the primary double-armed lever in order to feed the wire conductor into the welding zone along the X axis.

2. The apparatus according to claim 1, **characterized in that** on both arms of the primary double-armed lever brackets are mounted with the loads which may be moved along them along the Y axis.
